# EUROPÄISCHE PATENTSCHRIFT

(11) **EP 3 111 186 B1**
(45) Veröffentlichungstag und Bekanntmachung des Hinweises auf die Patenterteilung: **11.04.2018**
(21) Anmeldenummer: 15702153.6
(22) Anmeldetag: 16.01.2015
(51) Int. Cl.: G01L 19/06, G01L 9/02, G01L 19/00, G01L 9/00, G01L 13/02

(54) **DIFFERENZDRUCKMESSAUFNEHMER**
DIFFERENTIAL PRESSURE SENSOR
CAPTEUR DE PRESSION DIFFÉRENTIELLE

(30) Priorität: 28.02.2014 DE 102014102719
(43) Veröffentlichungstag der Anmeldung: 04.01.2017
(73) Patentinhaber: Endress+Hauser SE+Co. KG, 79689 Maulburg (DE)
(72) Erfinder: HÜGEL, Michael, 79541 Lörrach (DE); UEHLIN, Thomas, 79650 Schopfheim (DE); HAHN, Christian, 79585 Steinen (DE)
(74) Vertreter: Andres, Angelika Maria
(86) Internationale Anmeldenummer: PCT/EP2015/050787
(87) Internationale Veröffentlichungsnummer: WO 2015/128111

(56) Entgegenhaltungen:
- WO-A1-88/07185
- US-A- 5 955 675

## Beschreibung

Die vorliegende Erfindung betrifft einen Differenzdruckmessaufnehmer, welcher einen Messaufnehmerkörper und einen Differenzdrucksensor aufweist, der in dem Messaufnehmerkörper angeordnet ist, wobei der Messaufnehmerkörper eine Prozessanschlussfläche Druckeingangsöffnung und einer zweiten Druckeingangsöffnung aufweist, wobei der Differenzdrucksensor durch die erste Druckeingangsöffnung mit einem ersten Druck und durch die zweite Druckeingangsöffnung mit einem zweiten Druck beaufschlagbar ist, wobei die erste Druckeingangsöffnung mit einer ersten Trennmembran verschlossen ist, wobei die zweite Druckeingangsöffnung mit einer zweiten Trennmembran verschlossen ist, wobei die erste Trennmemban mit einer ersten Dichtung gegenüber der Umgebung abgedichtet ist, und wobei die zweite Trennmembran mit einer zweiten Dichtung gegenüber der Umgebung abgedichtet ist.

Gattungsgemäße Differenzdruckmessaufnehmer sind beispielsweise in den Patenten US 5955675, US 5922965, US 6055863 und US 7080558 sowie der Offenlegungsschrift WO 88/07185 A1 beschrieben.

In den Differenzdruckmessaufnehmer gemäß der genannten Patente werden als Dichtungen insbesondere metallische Dichtringe eingesetzt, welche - wie die Druckeingangsöffnungen und Trennmembranen - in Vertiefungen in der Prozessanschlussfläche angeordnet sind, wobei durch die Tiefe der Vertiefungen die Kompression der Dichtringe vorgegeben ist, wenn man davon ausgeht dass die Prozessanschlussfläche des Differenzdruckmessaufnehmers im Einsatz gegen eine komplementäre Gegenfläche eines Flanschs gespannt ist.
Damit ist die Flächenpressung der Dichtringe, die einerseits so groß sein muss, dass die Dichtung einem Mediendruck standhält, und andererseits möglichst gering sein soll, um nicht die Messeigenschaften des Differenzdruckmessaufnehmers zu beeinträchtigen, im wesentlichen durch die Tiefe der Vertiefungen in der Prozessanschlussfläche definiert.

Die Präparation der Vertiefungen erfolgt insbesondere durch Span abhebende Bearbeitung des Messaufnehmerkörpers, was bei der erforderlichen Genauigkeit, wobei insbesondere Asymmetrien zwischen den beiden Vertiefungen zu vermeiden sind, sehr kostenintensiv ist. Es ist daher die Aufgabe der vorliegenden Erfindung, hier Abhilfe zu schaffen.

Die Aufgabe wird erfindungsgemäß gelöst durch den Differenzdruckmessaufnehmer gemäß dem unabhängigen Patentanspruch 1.

Die vorliegende Erfindung betrifft einen Differenzdruckmessaufnehmer, welcher einen Messaufnehmerkörper und einen Differenzdrucksensor aufweist, der in dem Messaufnehmerkörper angeordnet ist, wobei der Messaufnehmerkörper eine Prozessanschlussfläche mit einer ersten Druckeingangsöffnung und einer zweiten Druckeingangsöffnung aufweist, wobei der Differenzdrucksensor durch die erste Druckeingangsöffnung mit einem ersten Druck und durch die zweite Druckeingangsöffnung mit einem zweiten Druck beaufschlagbar ist, wobei die erste Druckeingangsöffnung mit einer ersten Trennmembran verschlossen ist, wobei die zweite Druckeingangsöffnung mit einer zweiten Trennmembran verschlossen ist, wobei die erste Trennmemban mit einer ersten Dichtung gegenüber der Umgebung abgedichtet ist, und wobei die zweite Trennmembran mit einer zweiten Dichtung gegenüber der Umgebung abgedichtet ist, wobei der Differenzdruckmessaufnehmer im Messbetrieb mit seiner Prozessanschlussfläche gegen einen Prozessanschlussflansch gespannt ist, dadurch gekennzeichnet, dass zwischen dem Prozessanschlussflansch und der Prozessanschlussfläche mindestens ein plattenförmiger Abstandhalter mit planparallelen Oberflächen eingespannt ist, welcher den Abstand zwischen der Prozessanschlussfläche und dem Prozessanschlussflansch definiert und eine Einspannung der Dichtungen zwischen der Prozessanschlussfläche und dem Prozessanschlussflansch begrenzt.

Durch den plattenförmigen Abstandhalter wird über den definierten Abstand und die axiale Stärke der ersten und zweiten Dichtung in der Ruhelage der Kompressionsgrad und damit die Flächenpressung der Dichtungen definiert.

Mit dem erfindungsgemäßen Differenzdruckmessaufnehmer lässt sich eine definierte und symmetrische Flächenpressung der Dichtungen genauer und einfacher realisieren, da die Herstellung eines Abstandhalters aus plattenförmigen Material mit planparallelen Oberflächen einfacher zu realisieren ist als die Präparation von Vertiefungen durch Span abhebende Bearbeitung des Messaufnehmerkörpers. Erfindungsgemäß weist der plattenförmigen Abstandhalter zwei durchgehende Durchgangsöffnungen auf, welche jeweils eine Dichtungsaufnahme bilden, und welche jeweils fluchtend mit einer der Messmembranen positioniert sind.
In einer Weiterbildung der Erfindung sind die Trennmembranen jeweils entlang einer umlaufenden Fügestelle im Randbereich der Trennmembran, welche jeweils eine der Druckeingangsöffnungen umgibt, mit dem Messaufnehmerkörper gefügt, wobei die Dichtungen jeweils auf dem Randbereich einer Trennmembran aufliegen, um die Fügestelle vor einem an der Trennmembranen anstehenden Prozessmedium zu schützen.
In einer Weiterbildung der Erfindung umfassen die Dichtungen einen metallischen Ringkörper, welche mindestens eine der Prozessanschlussfläche zugewandte erste Dichtfläche und mindestens eine der Prozessanschlussfläche abgewandte zweite Dichtfläche aufweist, wobei der axiale Abstand zwischen der ersten und der zweiten Dichtfläche durch Einspannen der Dichtungen zwischen der Prozessanschlussfläche und dem Prozessanschlussflansch auf den durch den Abstandhalter definierten Abstand zumindest anteilig elastisch verringert wird.
In einer Weiterbildung der Erfindung weisen die Ringkörper zumindest im Bereich einer der Dichtflächen eine nicht-metallische, insbesondere thermoplastische, Beschichtung auf.

In einer Weiterbildung der Erfindung weist die thermoplastische Beschichtung mit PTFE, PFA, ein anderes Fluoropolymer oder einen organischen Werkstoff auf, welches eines der genannten Fluoropolymere enthält.

In einer Weiterbildung der Erfindung weist der Abstandhalter einen Abstand der planparallelen Oberflächen auf, der nicht mehr als 5 mm, insbesondere nicht mehr als 2,5 mm, bevorzugt nicht mehr als 1,5 mm und besonders bevorzugt nicht mehr als 1,0 mm beträgt.

In einer Weiterbildung der Erfindung weisen die Durchgangsöffnungen in dem Abstandhalter einen Durchmesser auf, der nicht mehr als 40 mm, insbesondere nicht mehr als 30 mm und bevorzugt nicht mehr als 25 mm beträgt.

In einer Weiterbildung der Erfindung sind die metallischen Ringkörper als Schweißringe gestaltet, welche mit jeweils einer Trennmembran und dem Messaufnehmerkörper verschweißt sind.

In einer Weiterbildung der Erfindung sind die Dichtungen mit Presspassung in den Durchgangsöffnungen des Abstandhalters fixiert oder in Spielpassung in den Durchgangsöffnungen positioniert.

In einer Weiterbildung der Erfindung weist der Abstandhalter Durchgangsöffnungen auf, welche mit den Trennmembranen fluchten, wobei jeweils ein die Durchgangsöffnungen umgebender Randbereich des Abstandhalters plastisch verformt ist, um axial elastisch verformbare Dichtflächen zu bilden, welche durch Einspannen des Abstandhalters zwischen der Prozessanschlussfläche und einem Prozessanschlussflansch mit definierter Flächenpressung eingespannt werden.

In einer Weiterbildung der Erfindung weist der Abstandhalter zumindest im Bereich der elastisch verformbaren Dichtflächen eine nicht metallische, insbesondere thermoplastische, Beschichtung auf.

In einer Weiterbildung der Erfindung weist die thermoplastische Beschichtung mit PTFE, PFA, ein anderes Fluoropolymer oder einen organischen Werkstoff auf, welches eines der genannten Fluoropolymere enthält.

Die Erfindung wird nun anhand der in den Zeichnungen dargestellten Ausführungsbeispiele näher erläutert, es zeigt:
Fig. 1a: einen Längsschnitt durch ein Ausführungsbeispiel eines erfindungsgemäßen Differenzdruckmessaufnehmers;
Fig. 1b: eine Aufsicht auf das Ausführungsbeispiel eines erfindungsgemäßen Differenzdruckmessaufnehmers aus Fig. 1a;
Fig. 2: eine Detailansicht eines eingespannten Dichtrings des Ausführungsbeispiels eines erfindungsgemäßen Differenzdruckmessaufnehmers aus Fign. 1a und 1b;
Fig. 3: eine räumliche Darstellung eines zweiten Ausführungsbeispiels eines Abstandhalters eines erfindungsgemäßen Differenzdruckmessaufnehmers; und
Fig. 4: einen Detailansicht des Abstandhalters aus Fig. 3 im Längsschnitt;
Fig. 5: eine Detailansicht eines dritten Ausführungsbeispiels eines Abstandhalters eines erfindungsgemäßen Differenzdruckmessaufnehmers im Längsschnitt; und
Fig. 6: eine Detailansicht eines dritten Ausführungsbeispiels eines Abstandhalters eines erfindungsgemäßen Differenzdruckmessaufnehmers im Längsschnitt.

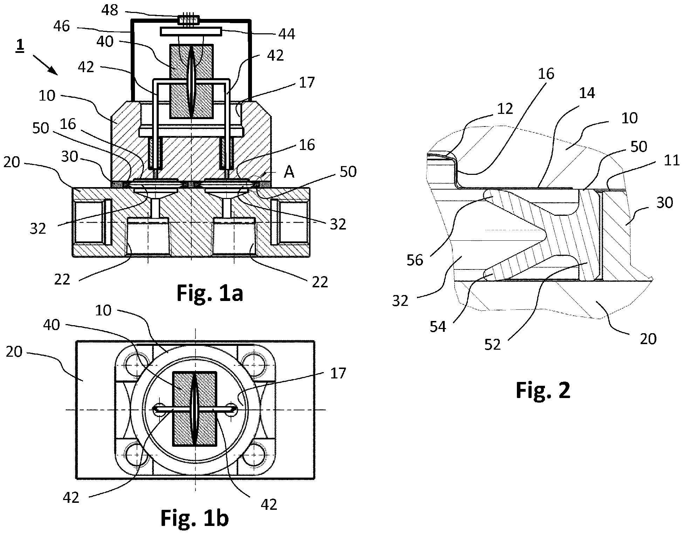

Der in Fign. 1a, 1b und 2 gezeigte Differenzdruckmessaufnehmer 1 umfasst einen Messaufnehmerkörper 10, der auf einem Prozessanschlussflansch 20 montiert ist, wobei zwischen dem Prozessanschlussflansch 20, und dem Messaufnehmerkörper 10 ein Abstandhalter 30 eingespannt ist, der so dimensioniert ist, dass Dichtringe, welche in Durchgangsöffnungen 32 des Abstandhalters 30 positioniert sind, eine definierte Flächenpressung aufweisen.

Der Messaufnehmerkörper 10 weist eine Sensorkammer 17 auf, in welcher ein Differenzdrucksensor 40 angeordnet ist, wobei der Differenzdrucksensor 40 über 2 Kapillarleitungen 42, von denen er gehalten ist, mit einem ersten Druck und einem zweiten Druck beaufschlagbar ist, deren Differenz er zu erfassen hat. Der erste und der zweite Druck werden dem Differenzdruckmessaufnehmer 1 durch Bohrungen 22, welche sich durch den Prozessanschlußflansch 20 erstrecken, und durch Durchgangsöffnungen 32 in dem Abstandhalter 30 zugeführt, wobei die Kapillarleitungen 42 jeweils mit einer Druckeingangsöffnung kommunizieren, die sich von Vertiefungen 16 in einer ebenen frontseitigen Prozessanschlussfläche 11 des Messaufnehmerkörpers 10 in das Innere des Messaufnehmerkörpers 10 erstrecken. Die Druckeingangsöffnungen sind jeweils mit einer flexiblen, metallischen Trennmembranen 16 verschlossen, wobei die metallischen Trennmembranen 16 in ihrem Randbereich 14, der auf der ebenen Prozessanschlussfläche 11 angeordnet ist, jeweils entlang einer umlaufenden Fügestelle mit dem Messaufnehmerkörper 10 druckdicht gefügt sind.

Der Differenzdrucksensor 40 umfasst einen Messwandler mit einem kapazitiven Differentialkondensator, der an eine Vorortelektronik 44 angeschlossen ist, welche den Messwandler treibt, die Kapazitäten des Differentialkondensators ermittelt und einen vom Differenzdruck abhängigen digitalen Messwert bereitstellt. Der Differenzdrucksensor 40 und die Vorortelektronik 44 sind durch ein druckfestes metallisches Gehäusesegment 46, welches mit dem Messaufnehmerkörper 10 verschweißt ist, von der Umwelt geschützt, wobei das Gehäusesegment eine druckfeste Glasdurchführung aufweist, durch welches die Vorortelektronik 44 an eine übergeordnete Schaltung, beispielsweise eines Messumformers angeschlossen ist.

Fig. 2 zeigt Einzelheiten des Details A aus Fig. 1a. In den beiden Durchgangsöffnungen 32 des Abstandhalters 30, der eine im wesentlichen planparallele Platte umfasst, ist jeweils ein Dichtring 50 angeordnet, welcher einen im wesentlichen formsteifen Basiskörper 52 aufweist, von dem sich ein erster Federschenkel 54 und ein zweiter Federschenkel 56 radial einwärts erstrecken, so dass der Dichtring im Schnitt etwa die Form eines K aufweist. Der Dichtring 50 weist einen metallischen Kern auf, der mit einer (hier nicht dargestellten) nicht-metallischen Schicht beschichtet ist. Die axiale Dimension des Dichtrings beträgt beispielsweise etwa 1 mm, wobei die Stärke der nicht-metallischen Beschichtung beispielsweise etwa 50 µm bis etwa 200 µm beträgt. Als Material für die nichtmetallische Beschichtung kommen insbesondere Fluorpolymere wie PTFE oder PFA oder Verbundwerkstoffe mit solchen Fluorpolymeren in Frage. Die Materialstärke des Abstandhalters 30 beträgt ebenfalls etwa 1 mm, wobei durch den Abstandhalter 30 der Abstand zwischen der Prozessanschlussfläche 11 des Messaufnehmerkörpers 10 und den Prozessanschlussflansch 20 - und damit die Endlage der beiden Federschenkel 54,56 - vorgegeben ist. Aus dem axialen Abstand der beiden Federschenkel 54,56 in einer nicht eingespannten Ruhelage des Dichtrings 50 ergibt sich damit der Kompressionsgrad bzw. die Flächenpressung zwischen den jeweils an den Dichtungspartnern anliegenden Dichtflächen der Federschenkel 54,56. Die Federschenkel sind vorzugsweise so dimensioniert, dass die Flächenpressung zwar zu einer Kompression der nicht metallischen Beschichtung aber nicht zu deren Durchstoßen führt. Eine PFA-Schicht kann durch die axiale Kompression der Federschenkel beispielsweise von einer Ausgangsstärke von 200 µm auf etwa 100 µm komprimiert werden. Die axiale Elastizität der Federschenkel gewährleistet eine hinreichend konstante Flächenpressung, wobei auch die erheblichen Wärmeausdehnungsunterschiede zwischen der nicht-metallischen Beschichtung und den metallischen Komponenten ausgeglichen werden können.

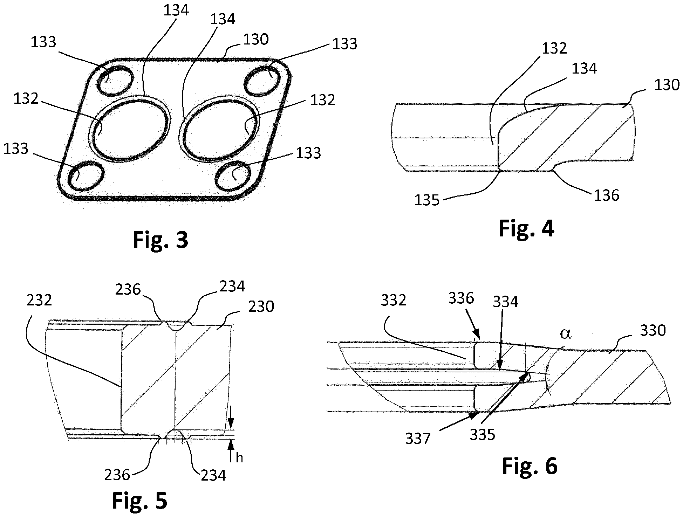

Der Dichtring 50 dichtet somit die Umgebung des Differenzdruckmessaufnehmers 1 gegenüber einem Druckpfad, der sich durch die Durchgangsöffnung 32 in dem Abstandhalter 30 zu der Trennmembran 16 erstreckt. Insofern als der zweite Federschenkel 56 auf dem Randbereich 14 der Trennmembran 16 aufliegt, ist auch die Fügestelle zwischen der Trennmembran 16 und dem Messaufnehmerkörper 10, die radial außerhalb der Dichtfläche zwischen dem zweiten Federschenkel und der Trennmembran verläuft, vor einem Kontakt mit einem in dem Druckpfad entstehenden Medium geschützt. Die Fign. 3-6 zeigen nun Ausführungsbeispiele von Abstandhaltern, wobei jeweils Dichtungen um Durchgangsöffnungen in den Abstandhaltern integriert sind. Die Abstandhalter weisen insbesondere einen metallischen Werkstoff auf und sind, zumindest im Bereich der Dichtungen, insbesondere auch vollflächig mit einer nicht-metallischen Beschichtung versehen, die beispielsweise einen thermoplastischen Werkstoff, insbesondere ein Fluorpolymer, beispielsweise PTFE oder PFA aufweist. Die Materialstärke diese Beschichtung beispielsweise beträgt nicht weniger als 50 µm und insbesondere nicht mehr als 200 µm.
Der in Fig. 3 gezeigte Abstandhalter 130 weist die gleiche Grundstruktur auf wie der Abstandhalter gemäß des 1. Ausführungsbeispiels, d.h., er weist zwei Durchgangsöffnungen 132 auf, durch welche sich im eingebauten Zustand des Abstandhalters Druckpfade erstrecken. Weiterhin weist er vier Bolzenlöcher 133 auf, durch welche Bolzen zu führen sind, mit denen der
Differenzdruckmessaufnehmer am Prozessanschlussflansch montiert wird. Abweichend zum ersten Ausführungsbeispiel sind bei diesem und den folgenden Ausführungsbeispielen des Abstandhalters Dichtungen in den Abstandhalter integriert. Vorliegend ist, wie detailliert in Fig. 4 dargestellt, jeweils ein Randbereich 134 um die Durchgangsöffnungen 132 durch plastische Verformung gegenüber den planparallelen Oberflächen des Abstandhalters 130 in eine neue, axial versetzte Gleichgewichtslage gebracht, aus der er durch Einspannen des Abstandhalters zwischen einer Prozessanschlussfläche und einem Prozessanschlussflansch elastisch ausgelenkt werden kann. Die plastische Verformung des Randbereichs kann wie bei der Präparation eines Durchzugs in Blechen erfolgen, beispielsweise wie bei der Herstellung von Gewinden in Blechen. Nach der Präparation des Durchzugs sind selbstverständlich ebene Dichtflächen zu präparieren, beispielsweise durch Schleifen. Anschließend sind zumindest die Dichtflächen, insbesondere aber die gesamten Oberflächen des Abstandhalters mit dem nicht-metallischen Material zu beschichten.

IM entfaltet ein Oberflächenabschnitt zwischen einem Innenradius 135 mit einem Außenradius 136 des axial vorstehenden Randbereichs die Wirkung einer ersten Dichtfläche, die beispielsweise am Randbereich der Trennmembran. Ein dem Außenradius 136 gegenüberliegender Oberflächenbereich auf der anderen Seite des Abstandhalters dient als zweite Dichtfläche, die beispielsweise am Prozessanschlussflansch anliegt.

Das in Fig. 5 gezeigte Ausführungsbeispiel eines Abstandhalters 230 umfasst zwei Durchgangsöffnungen 232, wobei durch plastische Verformung zur Durchgangsöffnung 232 konzentrische, ringförmig umlaufende Rippen 234,236 auf beiden Seiten des Abstandhalters um die Durchgangsöffnungen 232 gebildet sind, wobei die Höhe h der umlaufenden Rippen 234,236 gegenüber einem Graben zwischen den beiden Rippen größer ist als die Höhe der Rippen gegenüber den planparallelen Oberflächen des Abstandhalters. Im Bereich der Rippen 232 234 weist der Abstandhalter 230 die größten Flächenpressungen auf, wenn er zwischen einer Prozessanschlussfläche und einem Prozessanschlussflansch eingespannt ist. Die Rippen 232,234 auf einer Seite des Abstandhalters 230 liegen bestimmungsgemäß auf dem Randbereich einer Trennmembran auf, wobei vorzugsweise beide Rippen einen kleineren Radius aufweisen als der Radius einer umlaufenden Fügestelle, mit welcher die Trennmembran an der Prozessanschlussfläche des Differenzdruckmessaufnehmers befestigt ist. Die Konturen der Rippen sind insbesondere durch Prägeverfahren herzustellen, bevor die Durchgangsöffnungen in die Abstandhalter eingebracht werden.

Das in Fig. 6 gezeigte Ausführungsbeispiel eines Abstandhalters 330 weist 2 Durchgangsöffnungen 332 auf, wobei jeweils ein die Druckeröffnungen umgebender Randbereich in Höhe der halben Materialstärke des Abstandhalters eine umlaufenden Ringnut 334 aufweist, der zwischen einem ersten Federring 336 in einem zweiten Federring 337 gebildet ist, wobei die Federringe zueinander einen Öffnungswinkel aufweisen, der nicht mehr als 60° insbesondere nicht mehr als 45° und bevorzugt nicht mehr als 30° beträgt. Durch Einspannen des Abstandhalters 330 zwischen einem Prozessanschlussflansch und einer Prozessanschlussfläche eines Differenzdruckmessaufnehmers werden die Federring 336 337 axial komprimiert, so dass ihre äußeren Oberflächen als Dichtflächen gegen den Prozessanschlussflansch bzw. die Prozessanschlussfläche wirken.

Der Abstandhalter 330 kann beispielsweise in der Weise gefertigt werden, dass zunächst an Platten mit der halben Abstandhalterstärke ein Federring durch plastische Verformung des Randbereichs in Form eines Durchzugs um eine Durchgangsöffnung 232 gebildet wird, wobei anschließend 2 solche Platten miteinander gefügt werden. Hierbei ist darauf zu achten, dass am Außenradius 335 der Ringnut 334, die zwischen den beiden Ringfedern 336 337 gebildet ist, eine zuverlässige Verbindung, beispielsweise durch eine umlaufende durch Widerstandsschweißen präparierte Schweißnaht, zwischen den Platten vorhanden ist, wodurch vorzugsweise ein Krümmungsradius definiert ist, der einen Mindestwert nicht unterschreitet, um Kerbspannungen zwischen den Ringfedern zu begrenzen.

Gleichermaßen kann mittels einer hochdrehenden Diamantsägefolie in einem Blech der vollen Abstandhalterstärke ein umlaufender Spalt in die Wand einer Durchgangsöffnung geschnitten und anschließend mit einer Hartmetallscheibe o. ä. rollend aufgedornt werden.

Wie bereits zuvor erwähnt, ist auch der Abstandhalter 330 mit einem nicht-metallischen Werkstoff beschichtet, wobei die Beschichtung insbesondere ein Fluorpolymer aufweist, wobei die Beschichtung insbesondere im Bereich der Ringnut 334 zum Korrosionsschutz der Verbindung zwischen den beiden Platten am Außenradius 335 der Ringnut 334 dient.

## Patentansprüche

1. Differenzdruckmessaufnehmer (1), umfassend:
einen Messaufnehmerkörper (10); und
einen Differenzdrucksensor (40), der in dem Messaufnehmerkörper (10) angeordnet ist, wobei der Messaufnehmerkörper (10) eine Prozessanschlussfläche (11) mit einer ersten Druckeingangsöffnung und einer zweiten Druckeingangsöffnung aufweist,
wobei der Differenzdrucksensor (40) durch die erste Druckeingangsöffnung mit einem ersten Druck und durch die zweite Druckeingangsöffnung mit einem zweiten Druck beaufschlagbar ist, wobei die erste Druckeingangsöffnung mit einer ersten Trennmembran (16) verschlossen ist, wobei die zweite Druckeingangsöffnung mit einer zweiten Trennmembran (16) verschlossen ist,
wobei die erste Trennmembran (16) mit einer ersten Dichtung (50) gegenüber der Umgebung abgedichtet ist, und wobei die zweite Trennmembran (16) mit einer zweiten Dichtung (50) gegenüber der Umgebung abgedichtet ist, wobei der Differenzdruckmessaufnehmer im Messbetrieb mit seiner Prozessanschlussfläche gegen einen Prozessanschlussflansch gespannt ist, wobei zwischen dem Prozessanschlussflansch und der Prozessanschlussfläche mindestens ein plattenförmiger Abstandhalter (30) mit planparallelen Oberflächen eingespannt ist, welcher den Abstand zwischen der Prozessanschlussfläche und dem Prozessanschlussflansch definiert und eine Einspannung der Dichtungen (50) zwischen der Prozessanschlussfläche und dem Prozessanschlussflansch begrenzt,
**dadurch gekennzeichnet, dass**
der plattenförmige Abstandhalter zwei durchgehende Durchgangsöffnungen aufweist, welche jeweils eine Dichtungsaufnahme bilden, und welche jeweils fluchtend mit einer der Messmembranen positioniert sind.

2. Differenzdruckmessaufnehmer nach Anspruch 1, wobei die Trennmembranen jeweils entlang einer umlaufenden Fügestelle im Randbereich der Trennmembran, welche jeweils eine der Druckeingangsöffnungen umgibt, mit dem Messaufnehmerkörper gefügt, wobei die Dichtungen jeweils auf dem Randbereich einer Trennmembran aufliegen, um die Fügestelle vor einem an der Trennmembranen anstehenden Prozessmedium zu schützen.

3. Differenzdruckmessaufnehmer nach einem der Ansprüche 1 bis 2, wobei die Dichtungen jeweils einen metallischen Ringkörper aufweisen, welcher mindestens eine der Prozessanschlussfläche zugewandte erste Dichtfläche und mindestens eine der Prozessanschlussfläche abgewandte zweite Dichtfläche aufweist,
wobei der axiale Abstand zwischen der ersten und der zweiten Dichtfläche durch Einspannen der Dichtungen zwischen der Prozessanschlussfläche und dem Prozessanschlussflansch auf den durch den Abstandhalter definierten Abstand zumindest anteilig elastisch verringert wird.

4. Differenzdruckmessaufnehmer nach Anspruch 3, wobei die Ringkörper zumindest im Bereich einer der Dichtflächen eine nicht-metallische, thermoplastische, Beschichtung aufweisen.

5. Differenzdruckmessaufnehmer nach Anspruch 4, wobei die thermoplastische Beschichtung PTFE, PFA, ein anderes Fluoropolymer oder einen organischen Werkstoff aufweist, welche eines der genannten Fluoropolymere enthält.

6. Differenzdruckmessaufnehmer nach einem der Ansprüche 1 bis 5, wobei der Abstandhalter einen Abstand der planparallelen Oberflächen aufweist, der nicht mehr als 5 mm, insbesondere nicht mehr als 2,5 mm, bevorzugt nicht mehr als 1,5 mm und besonders bevorzugt nicht mehr als 1,0 mm beträgt.

7. Differenzdruckmessaufnehmer nach einem der Ansprüche 1 bis 6, wobei die Durchgangsöffnungen in dem Abstandhalter einen Durchmesser aufweisen, der nicht mehr als 40 mm, insbesondere nicht mehr als 30 mm und bevorzugt nicht mehr als 25 mm beträgt.

8. Differenzdruckmessaufnehmer nach Anspruch 3 oder einem von Anspruch 3 abhängigen Anspruch, wobei, die metallischen Ringkörper als Schweißringe gestaltet sind, welche mit jeweils einer Trennmembran und dem Messaufnehmerkörper verschweißt sind.

9. Differenzdruckmessaufnehmer nach Anspruch 1 oder einem von Anspruch 1 abhängigen Anspruch, wobei die Dichtungen mit Presspassung in den Durchgangsöffnungen des Abstandhalters fixiert sind oder in Spielpassung in den Durchgangsöffnungen positioniert sind.

10. Differenzdruckmessaufnehmer nach Anspruch 1, wobei der Abstandhalter Durchgangsöffnungen aufweist, welche mit den Trennmembranen fluchten,
wobei jeweils ein die Durchgangsöffnungen umgebender Randbereich des Abstandhalters plastisch verformt ist, um axial elastisch auslenkbare Dichtflächen zu bilden, welche durch Einspannen des Abstandhalters zwischen der Prozessanschlussfläche und einem Prozessanschlussflansch mit definierter Flächenpressung eingespannt sind.

11. Differenzdruckmessaufnehmer nach Anspruch 10, wobei der Abstandhalter zumindest im Bereich der elastisch auslenkbaren Dichtflächen eine nicht metallische, thermoplastische, Beschichtung aufweist.

12. Differenzdruckmessaufnehmer nach Anspruch 11 wobei die thermoplastische Beschichtung mit PTFE, PFA, ein anderes Fluoropolymer oder einen organischen Werkstoff aufweist, welcher eines der genannten Fluoropolymere enthält.

## Claims

1. Differential pressure transducer (1) comprising:
a transducer body (10); and
a differential pressure sensor (40), which is arranged in the transducer body (10),
wherein the transducer body (10) has a process connection surface (11) with a first pressure input opening and a second pressure input opening,
wherein the differential pressure sensor (40) can be exposed to a first pressure via the first pressure input opening and to a second pressure via a second pressure input opening, wherein the first pressure input opening is sealed with a first process isolating diaphragm (16), wherein the second pressure input opening is sealed with a second process isolating diaphragm (16),
wherein the first process isolating diaphragm (16) is sealed towards the environment with a first seal (50), and wherein the second process isolating diaphragm (16) is sealed towards the environment with a second seal (50), wherein, in measuring mode, the differential pressure transducer is clamped against a process connection flange with its process connection surface,
wherein at least one plate-like spacer (30) with plane-parallel surfaces is clamped between the process connection flange and the process connection surface, said spacer defining the distance between the process connection surface and the process connection flange and limiting a clamping of the seals (50) between the process connection surface and the process connection flange,
**characterized in that**
the plate-like spacer has two continuous openings, each of which form a seal holder and each of which is positioned such that it is aligned with one of the measuring diaphragms.

2. Differential pressure transducer as claimed in Claim 1,
wherein the process isolating diaphragms are joined with the transducer body along a circumferential joint in the peripheral area of the process isolating diaphragm, each of said diaphragms surrounding one of the pressure input openings, wherein each seal rests on the peripheral area of a process isolating diaphragm in order to protect the joint from a process medium present at the process isolating diaphragms.

3. Differential pressure transducer as claimed in one of the Claims 1 to 2,
wherein the seals each have a metal annular body, which has at least a first sealing surface facing towards the process connection surface and at least a second sealing surface facing away from the process connection surface,
wherein the axial distance between the first and second sealing surface is elastically reduced, at least in part, to the distance defined by the spacer by clamping the seals between the process connection surface and the process connection flange.

4. Differential pressure transducer as claimed in Claim 3,
wherein the annular bodies have a non-metal thermoplastic coating at least in the area of one of the sealing surfaces.

5. Differential pressure transducer as claimed in Claim 4,
wherein the thermoplastic coating comprises PTFE, PFA, another fluoropolymer or an organic material which contains one of the fluoropolymers mentioned.

6. Differential pressure transducer as claimed in one of the Claims 1 to 5,
wherein the spacer has a distance between the plane-parallel surfaces which is not more than 5 mm, particularly not more than 2.5 mm, preferably not more than 1.5 mm and most preferably not more than 1.0 mm.

7. Differential pressure transducer as claimed in one of the Claims 1 to 6,
wherein the openings in the spacer have a diameter that is not more than 40 mm, particularly not more than 30 mm and preferably not more than 25 mm.

8. Differential pressure transducer as claimed in Claim 3 or a claim dependent on Claim 3,
wherein the metal annular bodies are designed as welding rings each of which is welded to a process isolating diaphragm and the transducer body.

9. Differential pressure transducer as claimed in Claim 1 or a claim dependent on Claim 1,
wherein the seals are fixed by press fitting in the openings of the spacer, or are positioned in the openings with a clearance fit.

10. Differential pressure transducer as claimed in Claim 1,
wherein the spacer has openings which are aligned with the process isolating diaphragms,
wherein a peripheral area of the spacer surrounding the openings undergoes plastic deformation in order to form sealing surfaces that can be deflected elastically in the axial direction, said surfaces being clamped with a defined press fitting by clamping the spacer between the process connection surface and a process connection flange.

11. Differential pressure transducer as claimed in Claim 10,
wherein the spacer has a non-metal, thermoplastic coating at least in the area of the sealing surfaces that can be deflected elastically.

12. Differential pressure transducer as claimed in Claim 11,
wherein the thermoplastic coating with PTFE, PFA has another fluoropolymer or an organic material which contains one of the fluoropolymers mentioned.

## Revendications

1. Transmetteur de pression différentielle (1) comprenant :
un corps de transmetteur (10) ; et
un capteur de pression différentielle (40), lequel est disposé dans le corps de transmetteur (10), le corps de transmetteur (10) comportant une surface de raccordement au process (11) avec une première ouverture d'entrée de pression et une deuxième ouverture d'entrée de pression,
le capteur de pression différentielle (40) pouvant être soumis à une première pression à travers la première ouverture d'entrée de pression et à une deuxième pression à travers la deuxième ouverture d'entrée de pression, la première ouverture d'entrée de pression étant obturée avec une première membrane de séparation (16), la deuxième ouverture d'entrée de pression étant obturée avec une deuxième membrane de séparation (16),
la première membrane de séparation étant rendue étanche par rapport à l'environnement au moyen d'un premier joint (50), et la deuxième membrane de séparation étant rendue étanche par rapport à l'environnement au moyen d'un deuxième joint (50), le transmetteur de pression différentielle étant serré, en mode de mesure, avec sa surface de raccordement au process contre une bride de raccordement au process,
au moins une entretoise en forme de plaque, qui présente des surfaces planes et parallèles, étant serrée entre la bride de raccordement au process et la surface de raccordement au process, laquelle entretoise définit la distance entre la surface de raccordement au process et la bride de raccordement au process, et limite un serrage des joint (50) entre la surface de raccordement au process et la bride de raccordement au process,
**caractérisé en ce que**
l'entretoise en forme de plaque comporte deux ouvertures de passage traversantes, qui forment chacune un logement de joint et qui sont chacune positionnées de façon affleurante avec l'une des membranes de mesure.

2. Transmetteur de pression différentielle selon la revendication 1,
pour lequel les membranes de séparation sont assemblées avec le corps de transmetteur le long d'un point d'assemblage périphérique situé dans la zone marginale de la membrane de mesure, chacun des membranes entourant l'une des ouvertures d'entrée de pression, les joints reposant respectivement sur la zone marginale d'une membrane de mesure afin de protéger le point d'assemblage contre un fluide de process présent au niveau des membranes de séparation.

3. Transmetteur de pression différentielle selon l'une des revendications 1 à 2, pour lequel les joints présentent chacun un corps annulaire métallique, lequel comprend au moins une première surface d'étanchéité faisant face à la surface de raccordement au process et au moins une deuxième surface d'étanchéité située à l'opposé de la surface de raccordement au process,
la distance axiale entre la première et la deuxième surface d'étanchéité étant diminuée au moins partiellement de manière élastique par le serrage des joints entre la surface de raccordement au process et la bride de raccordement au process sur la distance définie par l'entretoise.

4. Transmetteur de pression différentielle selon la revendication 3,
pour lequel les corps annulaires présentent au moins dans la zone des surfaces d'étanchéité un revêtement thermoplastique non métallique.

5. Transmetteur de pression différentielle selon la revendication 4,
pour lequel le revêtement thermoplastique comporte du PTFE, du PFA ou un autre fluoropolymère, ou un matériau organique contenant l'un des fluoropolymères mentionnés.

6. Transmetteur de pression différentielle selon l'une des revendications 1 à 5,
pour lequel l'entretoise présente une distance des surfaces en plan parallèle, qui n'est pas supérieure à 5 mm, notamment pas supérieure à 2,5 mm, de préférence pas supérieure à 1,5 mm et particulièrement de préférence pas supérieure à 1,0 mm.

7. Transmetteur de pression différentielle selon l'une des revendications 1 à 6, pour lequel les ouvertures d'entrée de pression dans l'entretoise présentent un diamètre qui n'est pas supérieur à 40 mm, notamment pas supérieur à 30 mm et de préférence pas supérieur à 25 mm.

8. Transmetteur de pression différentielle selon la revendication 3 ou une revendication dépendant de la revendication 3,
pour lequel les corps annulaires métalliques sont conçus en tant que bagues de soudage, qui sont soudées avec respectivement une membrane de séparation et le corps de transmetteur.

9. Transmetteur de pression différentielle selon la revendication 1 ou une revendication dépendant de la revendication 1,
pour lequel les joints sont fixés avec un ajustement forcé dans les ouvertures de passage de l'entretoise ou positionnés avec un ajustement avec jeu dans les ouvertures de passage.

10. Transmetteur de pression différentielle selon la revendication 1,
pour lequel l'entretoise comporte des ouvertures de passage, qui sont alignées avec les membranes de séparation,
une zone marginale respective, entourant les ouvertures de passage, de l'entretoise subissant une déformation plastique afin de former des surfaces d'étanchéité pouvant être déviées élastiquement en direction axiale, lesquelles surfaces sont serrées avec une pression de surface définie par le serrage de l'entretoise entre la surface de raccordement au process et une bride de raccordement au process.

11. Transmetteur de pression différentielle selon la revendication 10,
pour lequel l'entretoise présente au moins dans la zone des surfaces d'étanchéité pouvant être déviées élastiquement un revêtement thermoplastique, notamment non métallique.

12. Transmetteur de pression différentielle selon la revendication 11,
pour lequel le revêtement thermoplastique comporte du PTFE, du PFA, un autre fluoropolymère ou un matériau organique, lequel contient l'un des fluoropolymères mentionnés.
